# EUROPEAN PATENT SPECIFICATION

(11) **EP 4 005 847 B1**
(45) Date of publication and mention of the grant of the patent: **10.04.2024**
(21) Application number: 20847760.4
(22) Date of filing: 03.06.2020
(51) Int. Cl.: B60K 26/04, E02F 9/00, G05G 11/00, G05G 1/01, E02F 9/20, E02F 3/32

(54) **CONSTRUCTION MACHINE**
BAUMASCHINE
ENGIN DE CHANTIER

(30) Priority: 31.07.2019 JP 2019140921
(43) Date of publication of application: 01.06.2022
(73) Proprietor: Yanmar Power Technology Co., Ltd., Osaka-shi Osaka 530-0013 (JP); Nippon Flex Controls Corp., Itami-shi, Hyogo 664-0845 (JP)
(72) Inventor: ISHII, Hisayuki, Chikugo-shi, Fukuoka 833-0055 (JP); IKEMATSU, Takashi, Chikugo-shi, Fukuoka 833-0055 (JP); HATANAKA, Mitsuyuki, Chikugo-shi, Fukuoka 833-0055 (JP); MATSUDA, Koichiro, Itami-shi, Hyogo 664-0845 (JP); OGAWA, Tsukasa, Itami-shi, Hyogo 664-0845 (JP)
(74) Representative: Vigand, Philippe
(86) International application number: PCT/JP2020/021906
(87) International publication number: WO 2021/019904

(56) References cited:
- WO-A1-2014/092355
- JP-A- H0 867 168
- JP-A- H11 311 134
- JP-A- H11 311 134
- JP-A- 2001 271 385
- JP-A- 2006 242 110
- JP-U- H0 270 056
- JP-U- S6 136 148
- JP-U- S61 192 542
- US-A- 5 113 825

## Description

### TECHNICAL FIELD

The present invention relates to a construction machine.

### BACKGROUND ART

Patent Document 1 below discloses a hydraulic operation machine configured so that a main rod for controlling an engine governor can be operated from either a travel-directed accelerator pedal or an operation-directed throttle lever.

Patent document 2 below discloses an engine control device of a hydraulic excavator in which, when an operation lever and a travel lever of a hydraulic excavator are in a neutral state, a hydraulic cylinder is operated, and, irrespective of the position of an accelerator lever, a governor lever is moved, thereby to reduce the engine rotation.

Patent document 3 discloses a construction machine with an engine controller which is arranged to operate a governor through an actuator which is controllable either by an accelerator lever in an operator's station or by radio control.

### CITATION LIST

### Patent Literature

Patent document 1: Japanese Examined Utility Model Application Publication No. S55-44931
Patent document 2: Japanese Unexamined Utility Model Application Publication No. S63-26734
Patent document 3: US 5 113 825 A

### DISCLOSURE OF INVENTION

### PROBLEMS TO BE SOLVED BY THE INVENTION

By the way, the engines used in construction machines such as hydraulic excavators are increasingly controlled by electronic governors, but there are many models of small construction machines, in particular, in which the engine is controlled by mechanical governors due to manufacturing cost problems. In recent years, technologies for reducing fuel consumption and carbon dioxide emission have been required for small construction machines as well, but Patent Document 1 does not disclose any technology for reducing the engine speed to a lower speed when the operation machine actuator is not operated.

In addition, Patent Document 2 requires a sensor for detecting the neutral state of the operation lever, which is difficult to introduce in terms of cost, especially in smaller models of small construction machines where low cost is required.

In view of the above problems, it is an object of the present invention to provide a construction machine which can be manufactured at a low cost, has good fuel efficiency, and emits less carbon dioxide.

### MEANS FOR SOLVING THE PROBLEMS

A construction machine according to the present invention includes an engine, a hydraulic pump driven by a drive power of the engine, an actuator driven by an operation oil pumped from the hydraulic pump, a cutoff lever that disables an operation of the actuator, a speed adjustment lever of an engine governor that controls a speed of the engine, a speed adjustment lever biasing member that biases the speed adjustment lever to a low-speed rotation side, a control cable that can tow the speed adjustment lever to a high-speed rotation side against a biasing force of the speed adjustment lever biasing member, an accelerator lever operable in a manner to operate the control cable in a towing direction and a releasing direction, and a relay device provided in a middle portion of the control cable, wherein the relay device has a towing force release mechanism that, in a state in which the accelerator lever is operated in the towing direction, in conjunction with a state in which the cutoff lever is turned thereby to render the actuator inoperable, releases the control cable's towing force for the speed adjustment lever.

According to the present invention, it is possible to provide a construction machine which can be manufactured at low cost, has good fuel economy and emits less carbon dioxide.

### BRIEF DESCRIPTION OF DRAWINGS

FIG. 1 is a side view of a construction machine according to the present embodiment.
FIG. 2A is a perspective view of the area around a control seat, viewed from the upper left front.
FIG. 2B is a view of the area around the control seat, viewed from the upper right rear.
FIG. 2C is a perspective view of the area around the control seat, viewed from the upper left rear.
FIG. 2D is a view of the area around the control seat, viewed from the lower left rear.
FIG. 3 is a schematic diagram of an engine speed control system according to the present embodiment.
FIG. 4A is a diagram for illustrating an engine speed controlling method.
FIG. 4B is a diagram for illustrating the engine speed controlling method.
FIG. 5 is a schematic diagram of an engine speed control system according to another embodiment.
FIG. 6A is a diagram for illustrating an engine speed controlling method according to the other embodiment.
FIG. 6B is a diagram for illustrating the engine speed controlling method according to the other embodiment.
FIG. 6C is a diagram for illustrating the engine speed controlling method according to the other embodiment.

### DESCRIPTION OF EMBODIMENTS

An embodiment of the present invention will be described below with reference to the drawings.

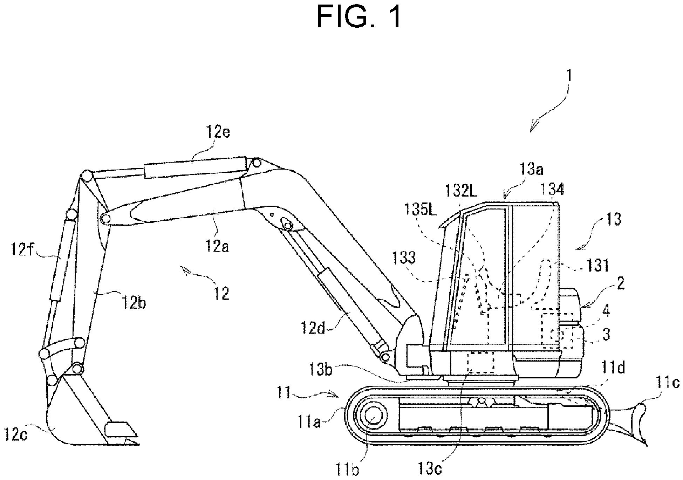

First, referring to FIG. 1, an outline structure of a hydraulic excavator 1 as an example of a construction machine will be described. However, the construction machine is not limited to the hydraulic excavator 1, but may be any other vehicle such as a wheel loader. The hydraulic excavator 1 is provided with a lower travel body 11, an operation machine 12, and an upper turn body 13.

The lower travel body 11 is driven by power from an engine 3 housed inside an engine compartment 2 thereby to cause the hydraulic excavator 1 to travel. The lower travel body 11 is provided with a pair of left and right crawlers 11a, 11a and a pair of left and right travel motors 11b, 11b. The left and right travel motors 11b, 11b, which are hydraulic motors, drive the left and right crawlers 11a, 11a, respectively, thus enabling the hydraulic excavator 1 to move forward and backward. Further, the lower travel body 11 is provided with a blade 11c and a blade cylinder 11d for turning the blade 11c in an upper-lower direction.

The operation machine 12 is driven by the power from the engine 3, and performs excavation operation of soil, sand, etc. The operation machine 12 is equipped with a boom 12a, an arm 12b, and a bucket 12c, which can be driven independently thereby to enable the excavation operation. The boom 12a, the arm 12b, and the bucket 12c each correspond to an operation portion, and the hydraulic excavator 1 has a plurality of operation portions.

The boom 12a is supported at a base end portion thereof by a front portion of the upper turn body 13, and is turned by a boom cylinder 12d which is telescopically movable. The arm 12b is supported at a base end portion thereof by a tip end portion of the boom 12a, and is turned by an arm cylinder 12e which is telescopically movable.

Then, the bucket 12c is supported at a base end portion thereof by a tip end portion of the arm 12b, and is turned by a bucket cylinder 12f which is telescopically movable. The boom cylinder 12d, the arm cylinder 12e, and the bucket cylinder 12f are composed of hydraulic cylinders (corresponding to actuators).

The upper turn body 13 is configured to be turnable via a turn bearing (not shown) relative to the lower travel body 11. In the upper turn body 13, a control portion 13a, the engine 3, a turn stand 13b, a turn motor 13c, and the like are arranged. A driving force of the turn motor 13c, which is a hydraulic motor, turns the upper turn body 13 via the turn bearing. A hydraulic pump 4 driven by the drive power of the engine 3 is also arranged in the upper turn body 13. The hydraulic pump 4 supplies an operation oil to each hydraulic motor and each hydraulic cylinder. That is, the hydraulic motor and the hydraulic cylinder are driven by the operation oil pumped from the hydraulic pump 4.

A control seat 131 is arranged in the control portion 13a. A pair of operation levers 132L, 132R are arranged on the left and right sides of the control seat 131, and a pair of travel levers 133, 133 are arranged in front. By sitting on the control seat 131 and operating the operation levers 132L, 132R, the travel levers 133, 133, and the like, the operator can control the engine 3, hydraulic motor, each hydraulic cylinder, and the like thereby to perform traveling, turning, operating, and the like.

Further, the operation levers 132L, 132R are integrally mounted to lever stands 134, 134, and cutoff levers 135L, 135R for turning on and off the operation machine 12's operation by the operation levers 132L, 132R are extended forwardly from the lever stands 134, 134. The cutoff levers 135L and 135R are configured to be turnable upward and downward, and are so configured that turning the cutoff levers 135L and 135R downward brings about a state in which the operation machine 12's operation by the operation levers 132L and 132R is possible, and turning the cutoff levers 135L and 135R upward brings about a locked state in which the operation machine 12's operation is not possible even by the operation of the operation levers 132L and 132R. Inside the lever stands 134, 134, there is provided a cutoff switch (not shown) which connects or disconnects the hydraulic circuit between the operation levers 132L, 132R and the actuators. The cutoff switch is configured to be turned ON when the cutoff levers 135L, 135R are turned downward, and meanwhile to be turned OFF when the cutoff levers 135L, 135R are turned upward. When the cutoff switch is turned OFF, the hydraulic circuit to the actuators is shut off, and even operating the operation levers 132L, 132R does not operate the operation machine 12.

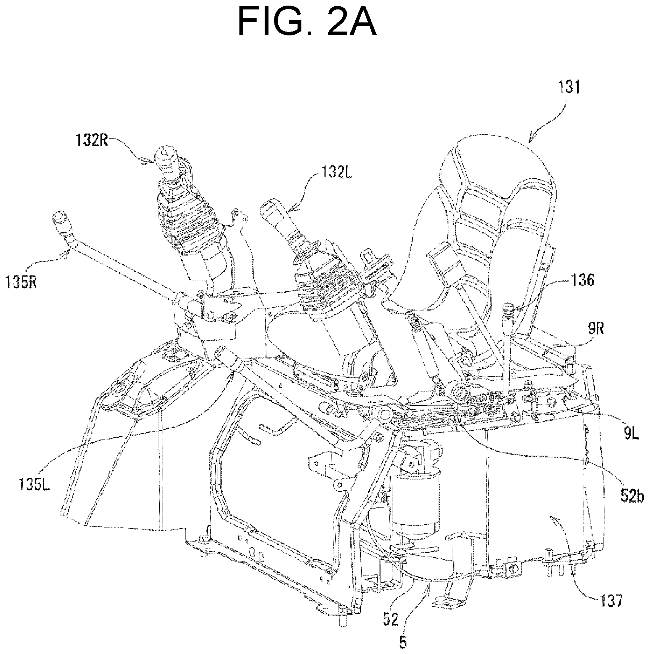

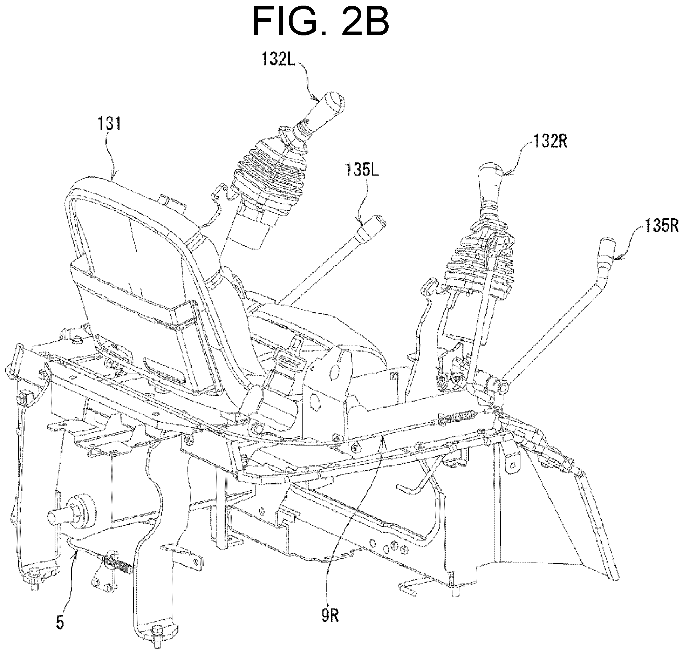

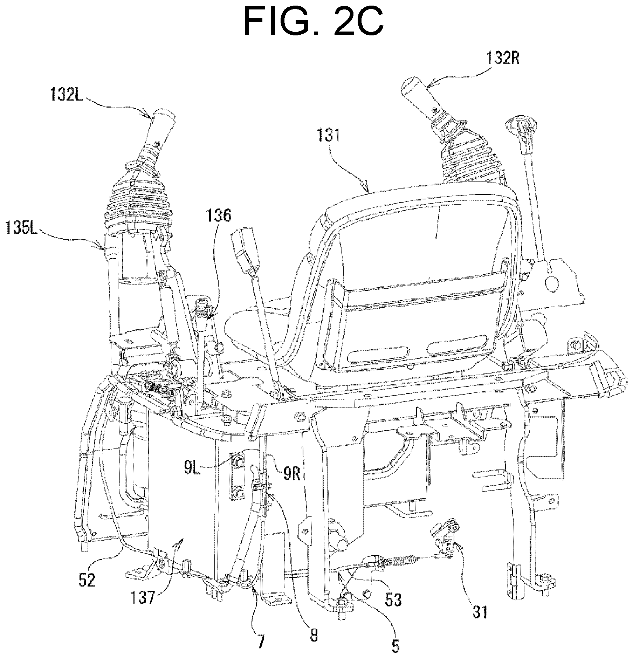

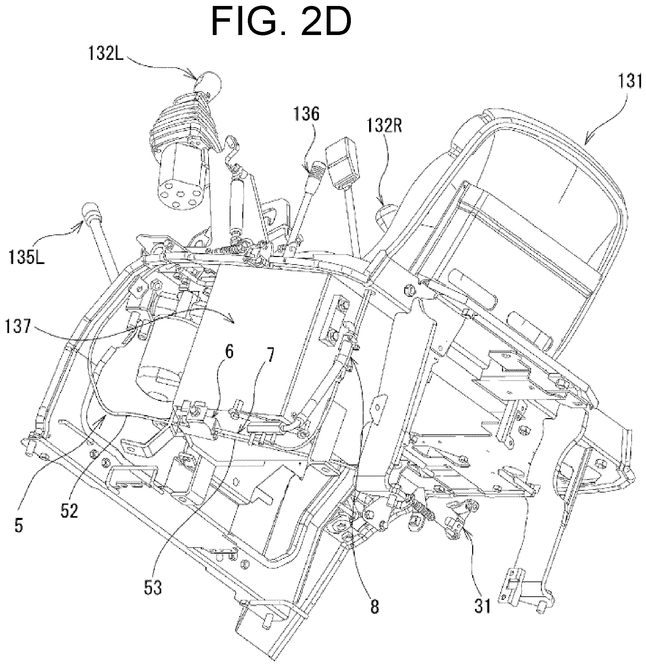

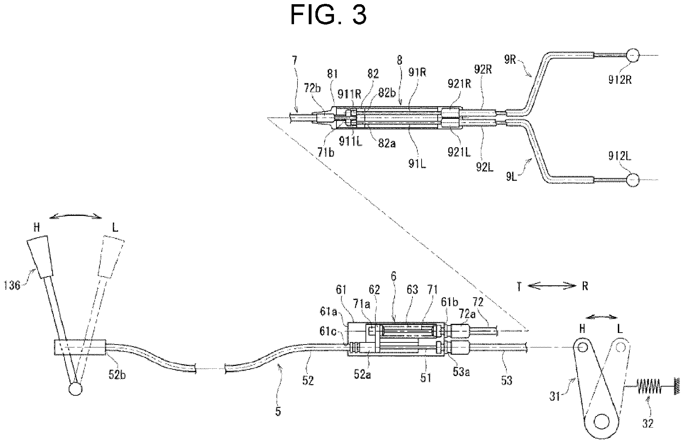

Next, the engine speed control system according to the present embodiment will be described. FIG. 2A is a perspective view of the area around the control seat 131, viewed from the upper left front, FIG. 2B is a perspective view of the area around the control seat 131, viewed from the upper right rear, FIG. 2C is a perspective view of the area around the control seat 131, viewed from the upper left rear, and FIG. 2D is a perspective view of the area around the control seat 131, viewed from the lower left rear. Fig. 3 schematically shows the engine speed control system.

The engine 3, at a rear portion thereof, is provided with a speed adjustment lever 31 for operating an engine governor (not shown) (see FIG. 2C), and is configured so that the engine speed can be increased by turning the speed adjustment lever 31 in one direction (left direction in FIG. 3) and decreased by turning the speed adjustment lever 31 in the other direction (right direction in FIG. 3). The speed adjustment lever 31 is biased to a low-speed rotation side L by a return spring 32 (equivalent to a speed adjustment lever biasing member).

A control cable 5 is connected to the speed adjustment lever 31, and the control cable 5 tows the speed adjustment lever 31 against a biasing force of the return spring 32, thus making it possible to turn the speed adjustment lever 31 to a high-speed rotation side H.

An accelerator lever 136 is provided on the left side of the control seat 131, and is axially supported to be turned freely in the front-rear direction. The accelerator lever 136 is connected to the speed adjustment lever 31 via the control cable 5. The control cable 5 extends forward from a base end portion of the accelerator lever 136, and then passes forward and below a reservoir tank 137 of the operation oil to the speed adjustment lever 31.

The control cable 5 has a double structure, and has an inner cable 51 connected to the speed adjustment lever 31 and the accelerator lever 136, and a first outer cable 52 and a second outer cable 53 that cover the inner cable 51. The first outer cable 52 covers the inner cable 51 on the accelerator lever 136 side from a relay device 6 described below, and the second outer cable 53 covers the inner cable 51 on the speed adjustment lever 31 side from the relay device 6.

In the normal state shown in FIG. 3, turning the accelerator lever 136 from the low-speed rotation side L to the high-speed rotation side H pulls the inner cable 51, making it possible to turn the speed adjustment lever 31 from the low-speed rotation side L to the high-speed rotation side H. On the other hand, turning the accelerator lever 136 from the high-speed rotation side H to the low-speed rotation side L releases the inner cable 51's towing force for the speed adjustment lever 31, thereby causing the return spring 32 to turn the speed adjustment lever 31 from the high-speed rotation side H to the low-speed rotation side L. That is, the accelerator lever 136 operates the inner cable 51 in a direction in which the inner cable 51 tows the speed adjustment lever 31 (towing direction T) and in a direction in which the inner cable 51 does not pull the speed adjustment lever 31 (releasing direction R).

The relay device 6 is provided in the middle portion of the control cable 5. The relay device 6 is fixed to a lower face of the reservoir tank 137. The relay device 6 has a device housing 61, an outer receiver 62 that is slidable within the device housing 61, and a compression spring 63 (corresponding to an outer receiver biasing member) that biases the outer receiver 62 toward the accelerator lever 136 side.

The device housing 61 has a box shape, and a through hole 61c through which the first outer cable 52 is inserted is formed in one end face 61a. An end portion 53a of the second outer cable 53 is fixed to another end face 61b.

A cap 52a of an end portion of the first outer cable 52 is fixed to the outer receiver 62. With this, when the outer receiver 62 slides within the device housing 61, the cap 52a moves integrally with the outer receiver 62. As a result, when the outer receiver 62 moves inward of the device housing 61, the first outer cable 52 is pulled and a portion thereof is drawn into the device housing 61.

The compression spring 63 is arranged between the outer receiver 62 and the inner wall of the device housing 61, and biases the outer receiver 62 toward the accelerator lever 136 side. The compression spring 63 is positioned around a cutoff inner cable 71 which will be described below. In order to allow an operation of the speed adjustment lever 31 by the accelerator lever 136 under a normal condition, a biasing force of the compression spring 63 must be greater than a biasing force of the return spring 32.

A cutoff cable 7 is connected to the relay device 6. The cutoff cable 7 extends from the relay device 6 below the reservoir tank 137 toward the rear side, and then extends behind the reservoir tank 137 toward the upper side. The cutoff cable 7 has a double structure, and is provided with the cutoff inner cable 71 and a cutoff outer cable 72 covering the cutoff inner cable 71. One end portion 71a of the cutoff inner cable 71 is fixed to the outer receiver 62. One end portion 72a of the cutoff outer cable 72 is fixed to the other end face 61b of the device housing 61.

A left cutoff cable 9L and a right cutoff cable 9R are connected to the cutoff cable 7 via a connection device 8. The connection device 8 is fixed to a rear face of the reservoir tank 137.

The left cutoff cable 9L extends from the base end portion of the left cutoff lever 135L through the left side of the control seat 131 to the rear, and then extends behind the reservoir tank 137 toward the lower side and is connected to the connection device 8. The right cutoff cable 9R extends from the base end portion of the right cutoff lever 135R through the right side and rear side of the control seat 131, and then extends behind the reservoir tank 137 toward the lower side and is connected to the connection device 8.

The left cutoff cable 9L has a double structure, and is provided with a left cutoff inner cable 91L and a left cutoff outer cable 92L which covers the left cutoff inner cable 91L. Similarly, the right cutoff cable 9R has a right cutoff inner cable 91R and a right cutoff outer cable 92R.

The connection device 8 connects the left cutoff cable 9L and the right cutoff cable 9R. The connection device 8 is provided with a connection case 81 and an inner receiver 82 which is slidable within the connection case 81.

Another end 72b of the cutoff outer cable 72 is fixed to one end of the connection case 81. Further, one end portion 921L of the left cutoff outer cable 92L and one end portion 921R of the right cutoff outer cable 92R are fixed to the other end of the connection case 81.

The other end 71b of the cutoff inner cable 71 is fixed to the inner receiver 82. With this, when the inner receiver 82 slides within the connection case 81, the other end 71b of the cutoff inner cable 71 moves integrally with the inner receiver 82. As a result, when the inner receiver 82 moves inward of the connection case 81, the cutoff inner cable 71 is pulled and a portion thereof is drawn into the connection case 81.

Further, the inner receiver 82 has a left insertion hole 82a through which the left cutoff inner cable 91L is inserted and a right insertion hole 82b through which the right cutoff inner cable 91R is inserted. A left cable end 911L, which is larger than the left insertion hole 82a and cannot pass through the left insertion hole 82a, is provided at the tip end portion of the left cutoff inner cable 91L. Similarly, a right cable end 911R, which is larger than the right insertion hole 82b and cannot pass through the right insertion hole 82b, is provided at the tip end portion of the right cutoff inner cable 91R. With this, for example, even when the right cutoff inner cable 91R is pulled toward the right cutoff lever 135R side and the inner receiver 82 moves integrally with the right cable end 911R, the left cable end 911L does not move.

Abase end portion 912L of the left cutoff inner cable 91L is connected to the left cutoff lever 135L, and turning the left cutoff lever 135L upward pulls the left cutoff inner cable 91L. Similarly, a base end portion 912R of the right cutoff inner cable 91R is connected to the right cutoff lever 135R, and turning the right cutoff lever 135R upward pulls the right cutoff inner cable 91R.

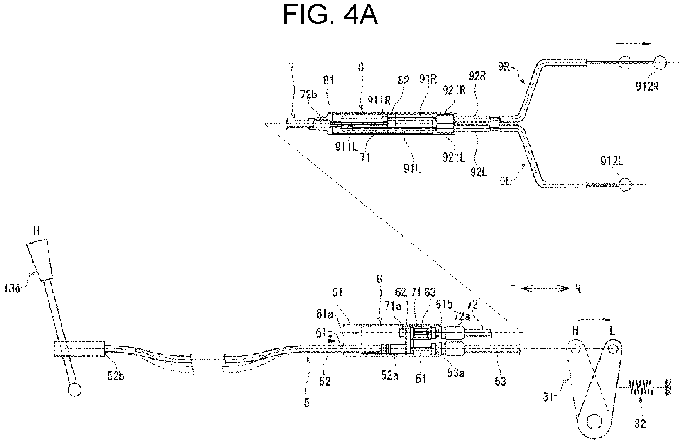

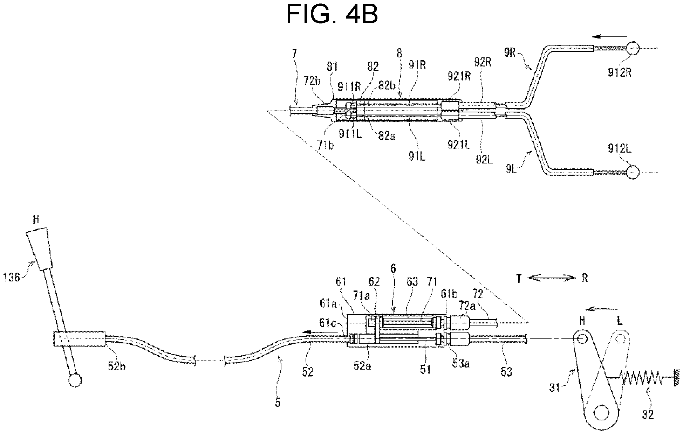

Next, an engine speed controlling method according to the present embodiment will be described. FIG. 4A is a state in which the right cutoff lever 135R is turned upward from the state of FIG. 3 (the operation machine 12 is in a state of being locked), and FIG. 4B is a state in which the right cutoff lever 135R is turned downward from the state of FIG. 4A (the operation machine 12 is in a state of being operable).

When the right cutoff lever 135R is turned upward in the state where the accelerator lever 136 shown in FIG. 3 is operated in the high-speed rotation side H, i.e., in the towing direction T, as shown in FIG. 4A, the right cutoff inner cable 91R is pulled to the right cutoff lever 135R side, and the inner receiver 82 together with the right cable end 911R moves to the right cutoff lever 135R side. With this, the cutoff inner cable 71 connected to the inner receiver 82 is pulled, and the outer receiver 62 fixed to one end portion 71a of the cutoff inner cable 71 is towed toward the speed adjustment lever 31 while compressing the compression spring 63.

Since the cap 52a of the first outer cable 52 is fixed or abutted to the outer receiver 62, when the outer receiver 62 moves to the speed adjustment lever 31 side, the operation of the outer reaction force generated to the first outer cable 52 by the towing of the inner cable 51 by the return spring 32 of the speed adjustment lever 31 causes a portion of the first outer cable 52 to be pulled into the device housing 61. The first outer cable 52's end portion 52b on the accelerator lever 136 side is fixed to the left side of the control seat 131, and the relay device 6 is also fixed to the reservoir tank 137; therefore, the first outer cable 52's portion being pulled into the device housing 61, as shown in FIG. 4A, reduces the deflection of the first outer cable 52 (the first outer cable 52 under a normal condition is shown as a two-dotted chain line). As the deflection of the first outer cable 52 is reduced, the deflection of the inner cable 51 on the accelerator lever 136 side from the relay device 6 is also reduced at the same time, so that the inner cable 51 on the speed adjustment lever 31 side from the relay device 6 is extended. With this, the speed adjustment lever 31, due to the towing force from the inner cable 51 being released, is turned by the return spring 32 to the low-speed rotation side L, thus making it possible to reduce the engine speed.

On the other hand, when the right cutoff lever 135R is turned downward, as shown in FIG. 4B, the outer receiver 62, due to the towing force from the cutoff inner cable 71 being released, returns to its original position by the compression spring 63. At the same time, the first outer cable 52's cap 52a fixed to the outer receiver 62 also returns to its original position, thus increasing the deflection of the first outer cable 52. As the deflection of the first outer cable 52 increases, at the same time, the deflection of the inner cable 51 on the accelerator lever 136 side from the relay device 6 also increases, so that the inner cable 51 on the speed adjustment lever 31 side from the relay device 6 shrinks. With this, the speed adjustment lever 31 is turned to the high-speed rotation side H by the towing force of the inner cable 51, thus making it possible to increase the engine speed. At this time, the biasing force of the compression spring 63 needs to be greater than the biasing force of the return spring 32. At the same time as the engine speed increases, the operation system of the speed adjustment lever 31 by the accelerator lever 136 is restored.

As described above, a hydraulic excavator 1 according to the present embodiment includes an engine 3, a hydraulic pump 4 driven by a drive power of the engine 3, an actuator driven by an operation oil pumped from the hydraulic pump 4, a cutoff lever 135L, 135R that disables an operation of the actuator, a speed adjustment lever 31 of an engine governor that controls a speed of the engine 3, a return spring 32 that biases the speed adjustment lever 31 to a low-speed rotation side L, a control cable 5 that can tow the speed adjustment lever 31 to a high-speed rotation side H against a biasing force of the return spring 32, an accelerator lever 136 operable in a manner to operate the control cable 5 in a towing direction T and a releasing direction R, and a relay device 6 provided in a middle portion of the control cable 5, wherein the relay device 6 has a towing force release mechanism that, in a state in which the accelerator lever 136 is operated in the towing direction T, in conjunction with a state in which the cutoff lever 135L, 135R is turned thereby to render the actuator inoperable, releases the control cable 5's towing force for the speed adjustment lever 31.

According to such a configuration, when the cutoff levers 135L, 135R are turned thereby to render the actuator inoperable, the control cable 5's towing force for the speed adjustment lever 31 is released, so that the speed adjustment lever 31 is adjusted to the low-speed rotation side L by the biasing force of the return spring 32, making it possible to reduce the engine speed. Accordingly, the hydraulic excavator 1 that can be manufactured at a low cost due to its simple structure not using a sensor or the like, that brings about good fuel efficiency, and that causes low carbon dioxide emission can be easily provided.

Further, the control cable 5 has the inner cable 51 connected to the speed adjustment lever 31 and the accelerator lever 136, the first outer cable 52 on the accelerator lever 136 side from the relay device 6, and the second outer cable 53 on the speed adjustment lever 31 side from the relay device 6, the towing force release mechanism may be one that releases the towing force of the inner cable 51 by pulling a portion of the first outer cable 52 into the relay device 6.

Further, the relay device 6 has the device housing 61, the outer receiver 62 that is fixed to the first outer cable 52's end portion on the speed adjustment lever 31 side and is slidable in the device housing 61, and the compression spring 63 that presses the outer receiver 62 toward the accelerator lever 136 side; the outer receiver 62 may be one that is towed by the cutoff cable 7, which is pulled in conjunction with the turning of the cutoff levers 135L, 135R, to the speed adjustment lever 31 side against the biasing force of the compression spring 63, thus pulling a portion of the first outer cable 52 into the device housing 61.

Further, in the hydraulic excavator 1 of the present embodiment, the biasing force of the compression spring 63 is greater than the biasing force of the return spring 32.

### Another embodiment

The hydraulic excavator 1 may be so made as to be provided with a towing force release mechanism cancelling device 64 that cancels the control cable 5's towing force for the speed adjustment lever 31. The towing force release mechanism cancelling device 64 releases the outer receiver 62 from the force of being towed to the speed adjustment lever 31 side against the biasing force of the compression spring 63.

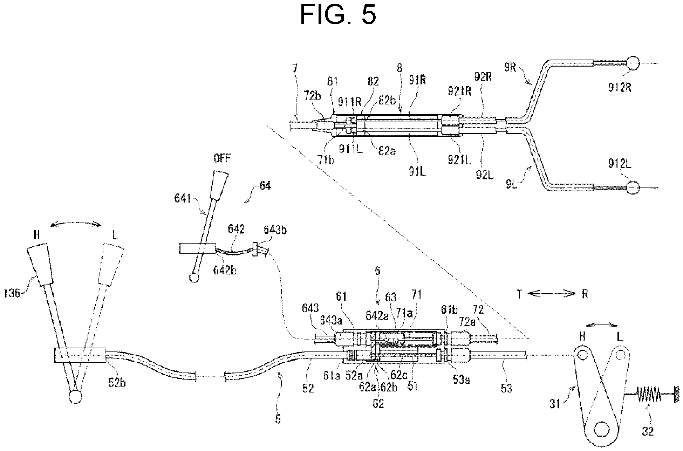

FIG. 5 schematically illustrates an engine speed control system according to another embodiment. According to the other embodiment, the outer receiver 62 includes an outer receiver body portion 62a that is fixed to the first outer cable 52's end portion on the speed adjustment lever 31 side, and a biasing member receiving portion 62b that is towed by the cutoff inner cable 71 to the speed adjustment lever 31 side against the biasing force of the compression spring 63.

The cap 52a at the end portion of the first outer cable 52 is fixed or abutted to the outer receiver body portion 62a. A cancel cable 642 is connected to the outer receiver body portion 62a. The cancel cable 642 passes through the outer receiver body portion 62a, and a cable end 642a of the cancel cable 642 is larger than a through hole formed in the outer receiver body portion 62a.

The biasing member receiving portion 62b has a protruding portion 62c protruding toward the speed adjustment lever 31 side, and the compression spring 63 is arranged around the protruding portion 62c. The biasing member receiving portion 62b is biased toward the accelerator lever 136 side by the compression spring 63.

The inside of the protruding portion 62c is a hollow cavity. The cable end 642a of the cancel cable 642 is smaller than the cross-section of the cavity formed inside the protruding portion 62c. With this, the cable end 642a is movable inside the protruding portion 62c.

The protruding portion 62c of the biasing member receiving portion 62b is engaged with the one end portion 71a of the cutoff inner cable 71. The biasing member receiving portion 62b is towed by the cutoff inner cable 71 to the speed adjustment lever 31 side against the biasing force of the compression spring 63.

A deceleration cancel lever 641 (equivalent to a cancel lever) is connected to the cancel cable 642's end portion 642b opposite to the outer receiver body portion 62a. The deceleration cancel lever 641 can be turned to a position where the cancel cable 642 is in a relaxed state and a position where the cancel cable 642 is in a tensioned state.

The cancel cable 642 is covered with a third outer cable 643. One end portion 643a of the third outer cable 643 is fixed to the device housing 61. Further, another end portion 643b of the third outer cable 643 is fixed to a periphery of the control seat 131 or the like. Thus, the length of the third outer cable 643 does not vary.

The towing force release mechanism cancelling device 64 is provided with the cancel cable 642 connected to the outer receiver body portion 62a, and the deceleration cancel lever 641 connected to the cancel cable 642's end portion 642b opposite to the outer receiver body portion 62a.

In the normal state shown in FIG. 5, the deceleration cancel lever 641 is in the OFF position, and the cancel cable 642 is in a relaxed state. Further, the left and right cutoff levers 135L, 135R are in a state of being turned downward (in a state in which the operation machine 12 is operable). At this time, the outer receiver body portion 62a and the biasing member receiving portion 62b are biased toward the accelerator lever 136 by the compression spring 63. In the normal operation, turning operation of the accelerator lever 136 can turn the speed adjustment lever 31.

In the towing force release mechanism cancelling device 64, when the turning position of the deceleration cancel lever 641 makes the cancel cable 642 relaxed, the cutoff inner cable 71 operates due to the turning of the cutoff levers 135L, 135R, and the outer receiver body portion 62a and the biasing member receiving portion 62b integrally move to the speed adjustment lever 31 side; when the turning position of the deceleration cancel lever 641 makes the cancel cable 642 tense, the outer receiver body portion 62a is held on the accelerator lever 136 side by the cancel cable 642, and only the biasing member receiving portion 62b is towed to the speed adjustment lever 31 side by the cutoff inner cable 71.

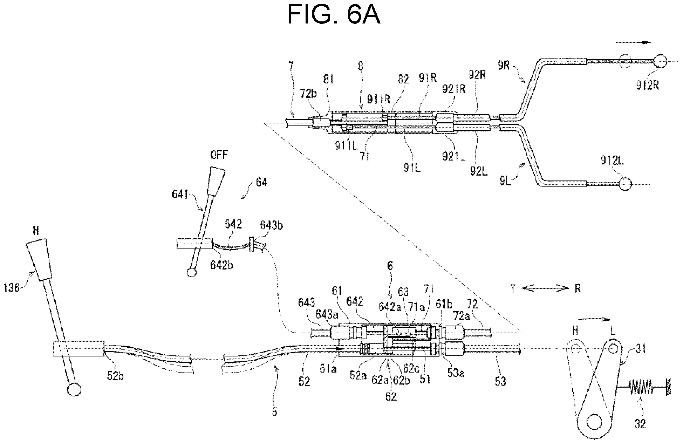

Next, the specific operation of the towing force release mechanism cancelling device 64 will be described. FIG. 6A is a state in which the right cutoff lever 135R is turned upward from the state of FIG. 5 (the operation machine 12 is in a locked state). At this time, the biasing member receiving portion 62b is towed toward the speed adjustment lever 31 side by the cutoff inner cable 71 while compressing the compression spring 63. Further, by the reaction force of the first outer cable 52, the outer receiver body portion 62a together with the biasing member receiving portion 62b moves to the speed adjustment lever 31 side. With this, as described above, the speed adjustment lever 31, due to the towing force from the inner cable 51 being released, is turned by the return spring 32 to the low-speed rotation side L, thus reducing the engine speed.

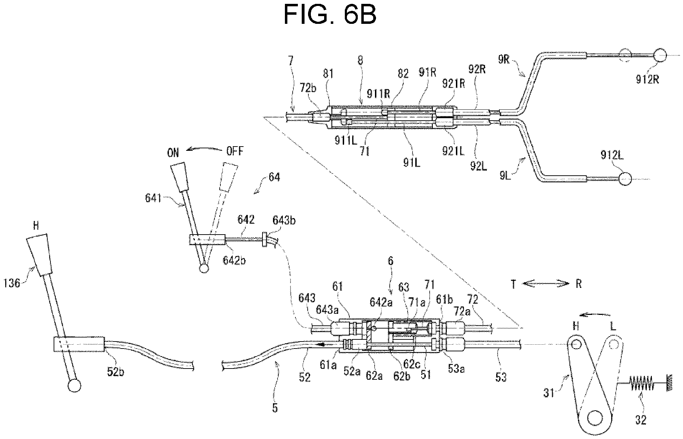

FIG. 6B is a state in which the deceleration cancel lever 641 is turned to the ON position from the state of FIG. 6A, and the cancel cable 642 is under tension. At this time, the outer receiver body portion 62a is pulled by the cancel cable 642 toward the accelerator lever 136 side thereby to return to the original position. At the same time, the cap 52a of the first outer cable 52 that is fixed or abutted to the outer receiver body portion 62a also returns to its original position. With this, the speed adjustment lever 31 is turned to the high-speed rotation side H by the towing force of the inner cable 51, thus increasing the engine speed. As a result, the cutoff levers 135L, 135R are turned upward; even when the operation machine 12 is locked, the engine 3 can be set to a high idle state. In any environment where an external temperature is low or at a high altitude, reducing the engine speed even when no work is being performed may cause an engine stall; however, in the environment where the external temperature is low or at the high altitude, the operator's option can cancel a deceleration function.

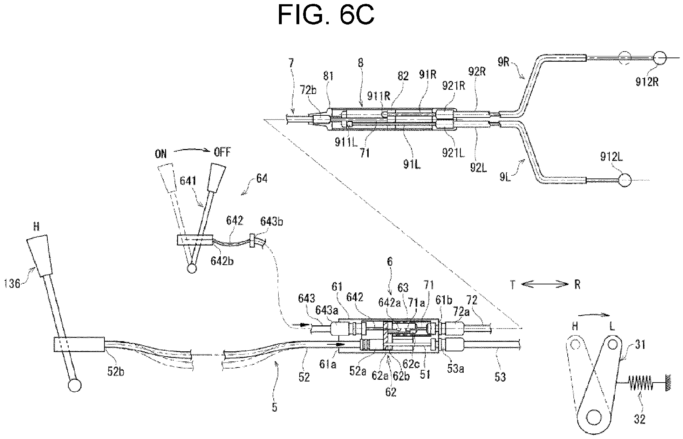

FIG. 6C is a state in which the deceleration cancel lever 641 is turned to the OFF position from the state of FIG. 6B, and the cancel cable 642 is in a relaxed state. At this time, the reaction force of the first outer cable 52 causes the cap 52a to push the outer receiver body portion 62a, and the outer receiver body portion 62a moves to the speed adjustment lever 31 until abutting on the biasing member receiving portion 62b. With this, the speed adjustment lever 31 is turned by the return spring 32 to the low-speed rotation side L, thus reducing the engine speed. The cancel cable 642's play allowance on the deceleration cancel lever 641 side needs to be longer than the stroke of the cutoff levers 135L, 135R, that is, the travel amount of the cutoff inner cable 71.

Although the embodiments of the present invention have been described above based on the drawings, it should be considered that the specific configuration is not limited to these embodiments. The scope of the invention is defined by the appended claims.

### DESCRIPTION OF REFERENCE NUMERALS

1 hydraulic excavator
3 engine
4 hydraulic pump
5 control cable
6 relay device
7 cutoff cable
8 connection device
9L cutoff cable
9R cutoff cable
31 speed adjustment lever
32 return spring
51 inner cable
52 first outer cable
53 second outer cable
61 device housing
62 outer receiver
63 compression spring
135L left cutoff lever
135R right cutoff lever
136 accelerator lever

## Claims

1. A construction machine comprising:
an engine (3);
a hydraulic pump (4) driven by a drive power of the engine;
an actuator driven by an operation oil pumped from the hydraulic pump;
a cutoff lever (135L, 135R) that disables an operation of the actuator;
a speed adjustment lever (31) of an engine governor that controls a speed of the engine;
a speed adjustment lever biasing member (32) that biases the speed adjustment lever to a low-speed rotation side;
a control cable (5) that can tow the speed adjustment lever to a high-speed rotation side against a biasing force of the speed adjustment lever biasing member;
an accelerator lever (136) operable in a manner to operate the control cable in a towing direction and a releasing direction; and
a relay device (6) provided in a middle portion of the control cable,
wherein the relay device has a towing force release mechanism that, in a state in which the accelerator lever is operated in the towing direction, in conjunction with a state in which the cutoff lever is turned thereby to render the actuator inoperable, releases the control cable's towing force for the speed adjustment lever.

2. The construction machine according to claim 1, wherein the control cable has an inner cable (51) connected to the speed adjustment lever and the accelerator lever, a first outer cable (52) on the accelerator lever side from the relay device, and a second outer cable (53) on the speed adjustment lever side from the relay device,
the towing force release mechanism pulls a portion of the first outer cable into the relay device thereby to release a towing force of the inner cable.

3. The construction machine according to claim 2, wherein the relay device (4) has
a device housing (61), an outer receiver (62) that is fixed to the first outer cable's end portion on the speed adjustment lever side, and is slidable in the device housing,
and an outer receiver biasing member that biases the outer receiver to the accelerator lever side, the outer receiver is towed by a cutoff cable, which is pulled in conjunction with a turning of the cutoff lever, toward the speed adjustment lever side against a biasing force of the outer receiver biasing member, thus pulling a portion of the first outer cable into the device housing.

4. The construction machine according to claim 3, wherein the biasing force of the outer receiver biasing member is greater than the biasing force of the speed adjustment lever biasing member.

5. The construction machine according to claim 3 or 4, comprising a towing force release mechanism cancelling device that cancels a releasing of the control cable's towing force, wherein the towing force release mechanism cancelling device releases the outer receiver from a force of being towed to the speed adjustment lever side against the biasing force of the outer receiver biasing member.

6. The construction machine according to claim 5, wherein the outer receiver is composed of an outer receiver body portion that is fixed to the first outer cable's end portion on the speed adjustment lever side, and a biasing member receiving portion that is towed by the cutoff cable to the speed adjustment lever side against the biasing force of the outer receiver biasing member, the towing force release mechanism cancelling device is provided with a cancel cable connected to the outer receiver body portion, and a cancel lever connected to the cancel cable's end portion on an opposite side to the outer receiver body portion,
when a turning position of the cancel lever makes the cancel cable relaxed, the turning of the cutoff lever allows the cutoff cable to tow the outer receiver body portion in integration with the biasing member receiving portion, to the speed adjustment lever side, and
when the turning position of the cancel lever makes cancel cable tense, the outer receiver body portion is towed to the accelerator lever side by the cancel cable, and the biasing member receiving portion is towed to the speed adjustment lever side by the cutoff cable.

## Patentansprüche

1. Baumaschine, die Folgendes umfasst:
einen Motor (3);
eine Hydraulikpumpe (4), die von einer Antriebsleistung des Motors angetrieben wird;
einen Aktuator, der von einem Betriebsöl angetrieben wird, das von der Hydraulikpumpe gepumpt wird;
einen Abschalthebel (135L, 135R), der einen Betrieb des Aktuators deaktiviert;
einen Drehzahlanpassungshebel (31) eines Motorreglers, der eine Drehzahl des Motors steuert;
ein Drehzahlanpassungshebelvorspannelement (32), das den Drehzahlanpassungshebel zu einer Rotationsseite niedriger Drehzahl vorspannt;
ein Steuerseil (5), das den Drehzahlanpassungshebel gegen eine Vorspannkraft des Drehzahlanpassungshebelvorspannelements zu einer Rotationsseite hoher Drehzahl ziehen kann;
einen Gaspedalhebel (136), der in einer Weise betreibbar ist, das Steuerseil in eine Zugrichtung und eine Löserichtung zu betreiben; und
eine Relaisvorrichtung (6), die in einem Mittenabschnitt des Steuerseils bereitgestellt ist,
wobei die Relaisvorrichtung einen Zugkraftlösemechanismus aufweist, der in einem Zustand, in dem der Gaspedalhebel in die Zugrichtung betrieben wird, in Verbindung mit einem Zustand, in dem der Abschalthebel gedreht wird, um dadurch den Aktuator betriebsunfähig zu machen, die Zugkraft des Steuerseils für den Drehzahlanpassungshebel löst.

2. Baumaschine nach Anspruch 1, wobei das Steuerseil ein inneres Seil (51), das mit dem Drehzahlanpassungshebel und dem Gaspedalhebel verbunden ist, ein erstes äußeres Seil (52) auf der Seite des Gaspedalhebels von der Relaisvorrichtung und ein zweites äußeres Seil (53) auf der Seite des Drehzahlanpassungshebels von der Relaisvorrichtung aufweist,
der Zugkraftlösemechanismus zieht einen Abschnitt des ersten äußeren Seils in die Relaisvorrichtung, um dadurch eine Zugkraft des inneren Seils zu lösen.

3. Baumaschine nach Anspruch 2, wobei die Relaisvorrichtung (4) ein Vorrichtungsgehäuse (61), eine äußere Aufnahme (62), die auf der Seite des Drehzahlanpassungshebels am Endabschnitt des ersten äußeren Seils befestigt und im Vorrichtungsgehäuse gleitbar ist,
und ein Vorspannelement für die äußere Aufnahme aufweist, das die äußere Aufnahme zur Seite des Gaspedalhebels vorspannt, die äußere Aufnahme von einem Abschaltseil gezogen wird, das in Verbindung mit einem Drehen des Abschalthebels gegen eine Vorspannkraft des Vorspannelements für die äußere Aufnahme zur Seite des Drehzahlanpassungshebels gezogen wird, wodurch ein Abschnitt des ersten äußeren Seils in das Vorrichtungsgehäuse gezogen wird.

4. Baumaschine nach Anspruch 3, wobei die Vorspannkraft des Vorspannelements für die äußere Aufnahme größer ist als die Vorspannkraft des Drehzahlanpassungshebelvorspannelements.

5. Baumaschine nach Anspruch 3 oder 4, die eine Zugkraftlösemechanismusabbruchvorrichtung umfasst, die ein Lösen der Zugkraft des Steuerseils abbricht, wobei die Zugkraftlösemechanismusabbruchvorrichtung die äußere Aufnahme aus einer Kraft des Ziehens zur Seite des Drehzahlanpassungshebels gegen die Vorspannkraft des Vorspannelements für die äußere Aufnahme löst.

6. Baumaschine nach Anspruch 5, wobei die äußere Aufnahme aus einem äußeren Aufnahmekörperabschnitt, der auf der Seite des Drehzahlanpassungshebels am Endabschnitt des ersten äußeren Seils befestigt ist, und einem Vorspannelementaufnahmeabschnitt besteht, der vom Abschaltseil gegen die Vorspannkraft des Vorspannelements der äußeren Aufnahme zur Seite des Drehzahlanpassungshebels gezogen wird, wobei die Zugkraftlösemechanismusabbruchvorrichtung mit einem Abbruchseil, das mit dem äußeren Aufnahmekörperabschnitt verbunden ist, und einem Abbruchhebel, der auf einer gegenüberliegenden Seite des äußeren Aufnahmekörperabschnitts mit dem Endabschnitt des Abbruchseils verbunden ist, versehen ist,
wenn eine Drehposition des Abbruchhebels das Abbruchseil entspannt, erlaubt es das Drehen des Abschalthebels, dass das Abschaltseil den äußeren Aufnahmekörperabschnitt in Integration mit dem Vorspannelementaufnahmeabschnitt zur Seite des Drehzahlanpassungshebels zieht, und
wenn die Drehposition des Abbruchhebels das Abbruchseil spannt, wird der äußere Aufnahmekörperabschnitt durch das Abbruchseil zur Seite des Gaspedalhebels gezogen und der Vorspannelementaufnahmeabschnitt wird vom Abschaltseil zur Seite des Drehzahlanpassungshebels gezogen.

## Revendications

1. Machine de construction comprenant :
un moteur (3) ;
une pompe hydraulique (4) entraînée par une puissance d'entraînement du moteur ;
un actionneur entraîné par une huile de fonctionnement pompée par la pompe hydraulique ;
un levier de coupure (135L, 135R) qui désactive un fonctionnement de l'actionneur ;
un levier de réglage de vitesse (31) d'un régulateur de moteur qui régule une vitesse du moteur ;
un élément de sollicitation de levier de réglage de vitesse (32) qui sollicite le levier de réglage de vitesse vers un côté de rotation à faible vitesse ;
un câble de commande (5) qui peut tirer le levier de réglage de vitesse vers un côté de rotation à grande vitesse contre une force de sollicitation de l'élément de sollicitation de levier de réglage de vitesse ;
un levier d'accélérateur (136) pouvant être actionné afin d'actionner le câble de commande dans une direction de traction et une direction de libération ; et
un dispositif de relais (6) prévu dans une partie centrale du câble de commande,
dans lequel le dispositif de relais a un mécanisme de libération de force de traction qui, dans un état dans lequel le levier d'accélérateur est actionné dans la direction de traction, conjointement avec un état dans lequel le levier de coupure est pivoté pour rendre ainsi l'actionneur inutilisable, libère la force de traction du câble de commande pour le levier de réglage de vitesse.

2. Machine de construction selon la revendication 1, dans laquelle le câble de commande a un câble interne (51) raccordé au levier de réglage de vitesse et au levier d'accélérateur, un premier câble externe (52) du côté du levier d'accélérateur depuis le dispositif de relais et un second câble externe (53) du côté du levier de réglage de vitesse depuis le dispositif de relais,
le mécanisme de libération de force de traction tire une partie du premier câble externe dans le dispositif de relais, afin de libérer ainsi une force de traction du câble interne.

3. Machine de construction selon la revendication 2, dans laquelle le dispositif de relais (4) a un boîtier de dispositif (61), un dispositif de réception externe (62) qui est fixé à la première extrémité du premier câble externe du côté du levier de réglage de vitesse et peut coulisser dans le boîtier de dispositif,
et un élément de sollicitation de dispositif de réception externe qui sollicite le dispositif de réception externe du côté du levier d'accélérateur, le dispositif de réception externe est tiré par un câble de coupure, qui est tiré conjointement avec une rotation du levier de coupure, vers le côté du levier de réglage de vitesse contre une force de sollicitation de l'élément de sollicitation de dispositif de réception externe, tirant ainsi une partie du premier câble externe dans le boîtier de dispositif.

4. Machine de construction selon la revendication 3, dans laquelle la force de sollicitation de l'élément de sollicitation de dispositif de réception externe est supérieure à la force de sollicitation de l'élément de sollicitation de levier de réglage de vitesse.

5. Machine de construction selon la revendication 3 ou 4, comprenant un dispositif d'annulation de mécanisme de libération de force de traction qui annule une libération de la force de traction du câble de commande, dans laquelle le dispositif d'annulation de mécanisme de libération de force de traction libère le dispositif de réception externe d'une force pour être tiré vers le côté de levier de réglage de vitesse contre la force de sollicitation de l'élément de sollicitation de dispositif de réception externe.

6. Machine de construction selon la revendication 5, dans laquelle le dispositif de réception externe est composé d'une partie de corps de dispositif de réception externe qui est fixée sur la partie d'extrémité du premier câble externe du côté du levier de réglage de vitesse, et une partie de réception d'élément de sollicitation qui est tirée par le câble de coupure du côté du levier de réglage de vitesse contre la force de sollicitation de l'élément de sollicitation de dispositif de réception externe, le dispositif d'annulation de mécanisme de libération de force de traction est prévu avec un câble d'annulation raccordé à la partie de corps de dispositif de réception externe, et un levier d'annulation raccordé à la partie d'extrémité du câble d'annulation du côté opposé à la partie de corps de dispositif de réception externe,
lorsqu'une position de rotation du levier d'annulation permet au câble d'annulation de se détendre, la rotation du levier de coupure permet au câble de coupure de tirer la partie de corps de dispositif de réception externe en intégration avec la partie de réception d'élément de sollicitation, du côté du levier de réglage de vitesse, et
lorsque la position de rotation du levier d'annulation permet au câble d'annulation de se tendre, la partie de corps de dispositif de réception externe est tirée du côté du levier d'accélérateur par le câble d'annulation, et la partie de réception d'élément de sollicitation est tirée du côté du levier de réglage de vitesse par le câble de coupure.
